## Europäisches Patentamt

## European Patent Office

## Office européen des brevets

(19)

(11) Veröffentlichungsnummer: **0 009 533**
**B1**

(12) ## EUROPÄISCHE PATENTSCHRIFT

(45) Veröffentlichungstag der Patentschrift:
**02.06.82**

(51) Int. Cl.³: **G 01 P 5/00, G 01 S 17/50**

(21) Anmeldenummer: **79101931.8**

(22) Anmeldetag: **13.06.79**

(54) **Doppler-Geschwindigkeitsmesser für Flugzeuge.**

(30) Priorität: **23.09.78 DE 2841499**

(43) Veröffentlichungstag der Anmeldung:
**16.04.80 Patentblatt 80/8**

(45) Bekanntmachung des Hinweises auf die Patenterteilung:
**02.06.82 Patentblatt 82/22**

(84) Benannte Vertragsstaaten:
**CH FR GB IT**

(56) Entgegenhaltungen:
**US-A-3 528 741**
**US-A-3 532 427**
**OPTICS AND LASER TECHNOLOGY, Vol. 5, Nr. 6, Dezember 1973 HAYWARDS HEATH (UK) J. OL-DENGARM et. al.: »Laser doppler velocimeter with optical frequency shifting«, Seiten 249−252.**
**SOVJET JOURNAL OF QUANTUM ELECTRO-NICS, Vol. 8, Nr. 4, April 1978 NEW YORK (US) G. E. VINTSLAV et al.: »Lidar measurements of the wind velocity by spatial filtering«, Seiten 442−446.**
**INSTRUMENTS & EXPERIMENTAL TECHNI-QUES, Vol. 19, Nr. 5/2, 9. Oktober 1976 NEW YORK**

(73) Patentinhaber: **Messerschmitt-Bölkow-Blohm Gesellschaft mit beschränkter Haftung, Postfach 801109, D-8000 München 80 (DE)**

(72) Erfinder: **Bogenberger, Richard, Föhrenwaldstrasse 22, D-8190 Wolfratshausen (DE)**

**(US) V. N. DAVYDOV et al.: »Doppler velocity meter with microwave modulator of optical radiation«, Seiten 1501−1502.**
**APPLIED OPTICS, Vol. 11, Nr. 4, April 1972 NEW YORK (US) W. M. FARMER: »Determination of a third orthogonal velocity component using two rotationally displaced laser doppler velocimeter systems«, Seiten 770−774.**
**APPLIED OPTICS, Vol. 17, Nr. 22, 15. November 1978 NEW YORK (US) H. OERTEL et al.: »Laser-anemointerferometer for simultaneous measurements of velocity and density«, Seiten 3535−3538.**

## Doppler-Geschwindigkeitsmesser für Flugzeuge

Die Erfindung bezieht sich auf einen Doppler-Geschwindigkeitsmesser für Flugzeuge für die Geschwindigkeitsmessung anhand von diffus lichtstreuenden Objekten, bei dem eine optische Strahlung als Informationsträger dient, unter Verwendung einer Sende-/Detektoranordnung zur Messung der Luftströmung in Flugrichtung oder quer dazu durch Vergleich der ausgesendeten und der rückgestrahlten Signale.

Solche Geschwindigkeitsmesser sind an sich bekannt. So ist beispielsweise aus der Zeitschrift »Z. Flugwiss. Weltraumforschung 2 (1978), Heft 3« (Seiten 151 bis 155) eine Anordnung bekanntgeworden, bei der ein gepulster Laser mit hoher Spitzenleistung zur Messung der Luftgeschwindigkeit vom Flugzeug aus verwendet wurde.

Hierbei wurden drei Verfahren untersucht. Beim ersten Verfahren erfolgte ein Vergleich durch Überlagerung der ausgesandten Laserlichtfrequenz mit der empfangenen — von relativ großen Teilchen rückgestreuten — Lichtfrequenz, die durch den IR-Strahl eines sehr stabilen Lasers hindurchlaufen.

Dieses Verfahren benutzt die Rückstreuung von größeren Aerosolen ($\lambda^4$-Gesetz), die in großer Höhe nur in geringer Anzahl vorhanden sind, außerdem kann nur die Geschwindigkeitskomponente in Richtung der Ausstrahlung gemessen werden.

Beim zweiten Verfahren, das auch der US-PS 35 28 741 zugrunde liegt, kam die klassische Laser-Doppler-Differenzanemometrie unter Verwendung der Rückstreuung mit Hilfe eines relativ leistungsschwachen Lasers zur Anwendung.

Hier basiert die Signalverarbeitung auf der Photonenkorrelation des sehr schwachen, von den Teilchen gestreuten Lichtsignals. Dieses Verfahren ist bei Verwendung in turbulenten Strömungen mit erheblichen Mängeln behaftet. Bei der Meßanordnung gemäß der vorgenannten US-Druckschrift wird mit monochromatisch-kohärentem Licht und der optischen Demodulation, d. h. der optischen Überlagerung des ausgesandten und des rückgestreuten Lichts, gearbeitet. Auch hier sind erhebliche Probleme bei der Auswertung und infolge der Turbulenzen durch Störung der Phase usw. gegeben.

Weiterhin wurde die Laser-Doppler-Differenzanemometrie unter Verwendung eines Hochleistungslasers im Pulsbetrieb vorgeschlagen. Hier zeigte es sich, daß generelle Einsatzfähigkeit nicht möglich ist, da zahlreiche, bisher noch ungelöste Probleme die Meßgenauigkeit beeinflussen, z. B. durch das Auftreten des thermischen Linseneffektes.

Aus »Soviet Journal of Quantum Electronics«, Vol. 8, Nr. 4, April 78, Seiten 442 bis 446 ist ein sogenanntes optisches Interferenz- und Hologrammverfahren unter Verwendung eines mechanischen Choppers bekanntgeworden, das sich auf die Rückstreuung von Laserstrahlung von Aerosolen in der Atmosphäre bezieht, wobei durch Überlagerung der Laserstrahlung die Geschwindigkeit der Aerosole durch die Doppler-Verschiebung des rückgestreuten Laserlichts ermittelt wird Hierzu ist eine optische Überlagerungseinrichtung erforderlich. Die Probleme bei der Auswertung in optischen Interferometern (optical mixing) und bei der direkten differentiellen Fotodetektion und die Probleme infolge der Turbulenzen durch Störungen der Phase usw. sind auch hier gegeben.

Der vorliegenden Erfindung liegt die Aufgabe zugrunde, einen Geschwindigkeitsmesser der eingangs genannten Art zu schaffen, der die vorgenannten Mängel des Standes der Technik nicht mehr aufweist, die Bestimmung der Anstellwinkel $\alpha$ und $\beta$ des Flugkörpers sowie der Geschwindigkeit V als absolute Meßgrößen erlaubt und außerdem die Bestimmung von Böen vor dem Flugzeug gewährleistet, ohne daß für die Aufgabenlösung kohärentes Licht erforderlich wäre.

Diese Aufgabe wird bei einer Vorrichtung der eingangs genannten Art durch die im kennzeichnenden Teil des Anspruchs 1 aufgezeigten Maßnahmen gelöst. In der Beschreibung sind Ausführungsbeispiele beschrieben und in den Figuren der Zeichnung dargestellt. Es zeigt

Fig. 1 ein Blockschaltbild für den Aufbau des Laser-Luftwerte-Sensors,

Fig. 2 eine Anordnung und Ausbildung eines Laser-Luftwerte-Sensors zur Bestimmung von V und den Anstellwinkeln in schematischer Darstellung.

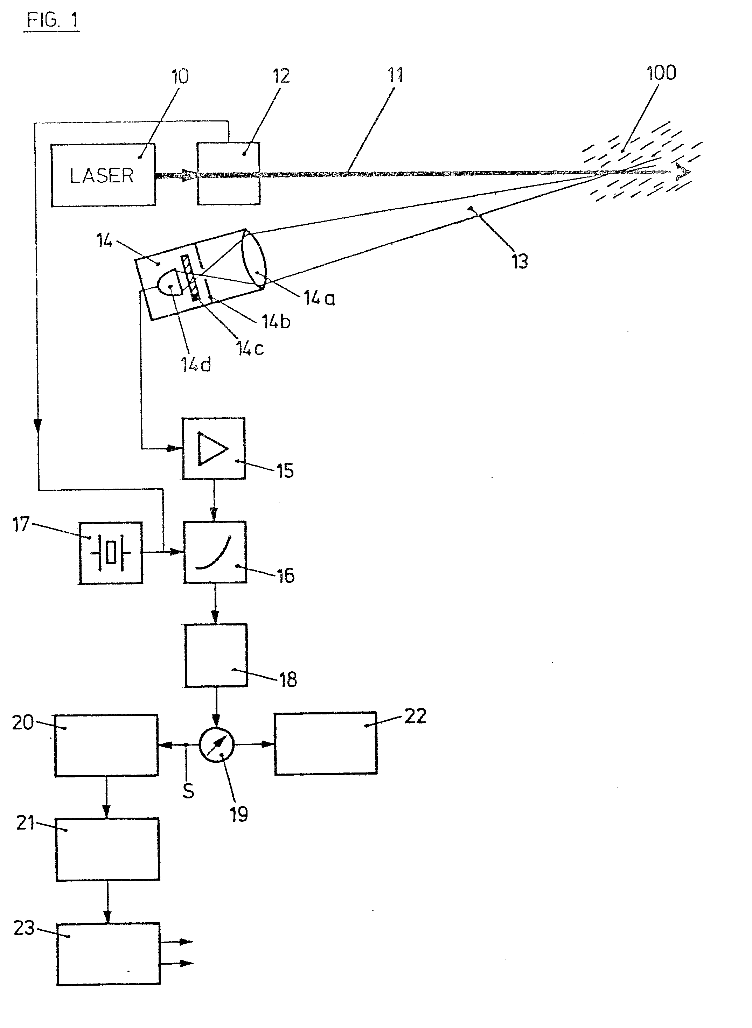

Der in der Fig. 1 dargestellte Aufbau des erfindungsgemäßen Laser-Luftwerte-Sensors setzt sich aus dem Laser 10 — beispielsweise einem Farbstoff-Laser — zusammen, dessen gebündelter Ausgangsstrahl mittels eines Modulators 12 hochfrequent mit der Frequenz des Oszillators 17 moduliert wird. Dieser modulierte Laserlichtstrahl 11 trifft außerhalb des aerodynamischen Störbereichs — der in einer bestimmten Entfernung vor der Flugzeugspitze beginnt — des Flugkörpers auf die Moleküle eines Luftvolumens 100 oder auf Aerosole. Diese Moleküle etc. rufen eine Rückstrahlung 13 des ausgesandten Lichtstrahles hervor, deren Modulation infolge der relativen Bewegung der Luftmoleküle etc. zum Flugkörper frequenzverschoben ist. Diese mit dem Doppler-Effekt behaftete Rückstrahlung wird von einer Empfängeranordnung 14 aufgenommen, die sich in dem gezeigten Ausführungsbeispiel aus einer Optik 14a, einem Raumfilter 14b, einem Interfrenzfilter 14c und der Detektoranordnung 14d zusammensetzt. Der Detektoranordnung ist ein Verstärker 15 nachgeschaltet und gibt das detektierte Rückstrahlsignal 13 an einen Mischer 16, in dem dieses Signal mit der Modulationsfrequenz des Oszillators (Lokaloszillator) 17 (Homodyn-Empfänger) oder mit einer Frequenz, die aus dem Oszillator 17 plus einer Zwischenfrequenz (Heterodyn-Empfänger) besteht, gemischt und über einen Tiefpaßfilter oder Bandpaß 18 an den Empfänger-Ausgang 19 gegeben wird.

Das erhaltene Differenz-Frequenzsignal (S) ist nun ein Maß für die Relativgeschwindigkeit des Senders 10 zu den Streukörpern des Luft- bzw. Meßvolumens 100, die in der Auswerteinheit 20 wertmäßig ermittelt wird. Erwähnt soll noch sein, daß eine günstige Frequenz des Oszillators 17 für diese Anwendung in einem Bereich von 500 MHz bis 1 GHz liegt.

Zur Bestimmung der Anstellwinkel $\alpha$ und $\beta$ des Flugkörpers und zur Messung vertikaler und horizontaler Böen — also der Querströmung — ist der Auswerteinheit 20 eine weitere Auswerteinheit mit Steuereinrichtung 21 nachgeschaltet, die über ein Koppelglied 23 das Meßergebnis automatisch an das Flugsteuerungssystem bzw. dessen Computer zum Böenausgleich — beispielsweise durch entsprechende Steuerung von sogenannten Kinnrudern — weiterleitet.

Nun ist es verschiedentlich von Bedeutung, außer den vorgenannten Meßergebnissen, auch noch eine Aussage über die Aerosol- oder Tröpfchengröße zu erhalten. Hierzu ist dem Homodyn-Empfänger oder Heterodynempfänger im vorliegend beschriebenen Ausführungsbeispiel, eine gesonderte Auswerteinheit 22 zugeordnet, in der das Meßsignal 13 zur Bestimmung der Größenwerte herangezogen wird.

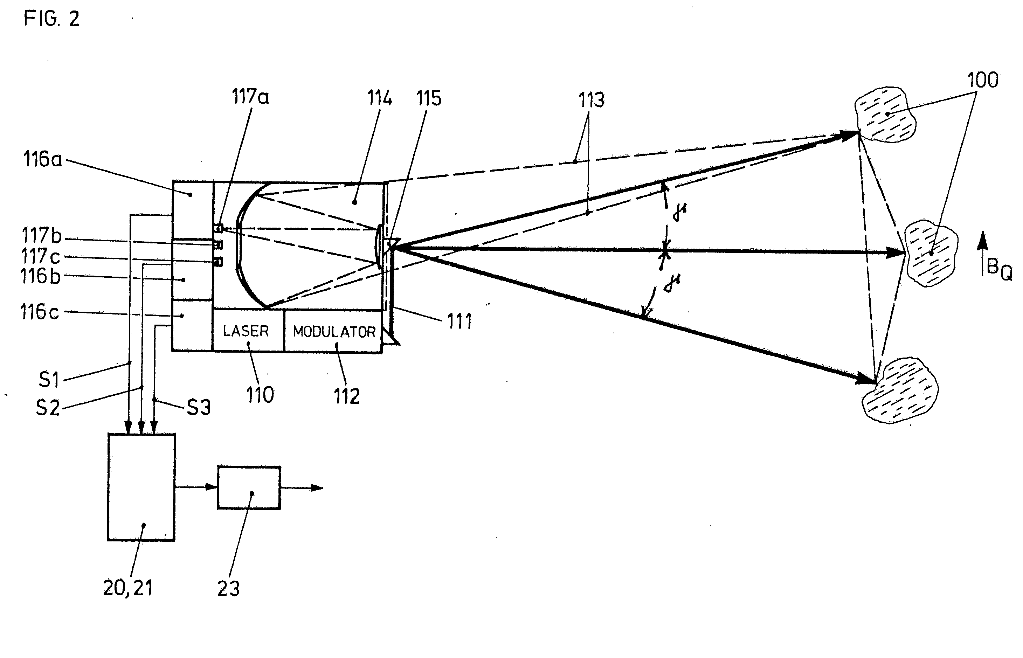

Die Fig. 2 zeigt nun die Ausbildung eines erfindungsgemäßen Laser-Luftwerte-Sensors zur gleichzeitigen Bestimmung der Geschwindigkeit V und der Anstellwinkel $\alpha$ und $\beta$ unter Verwendung eines an sich bekannten Cassegrain-Systems 114. Dieses Cassegrain-System 114 ist zusammen mit dem Laser 110 und dem Modulator 112 und der Elektronik 116a, 116b, 116c zu einer Baueinheit integriert und im Cockpit beziehungsweise an einer günstigen Stelle des Flugzeugbugs angeordnet. Den elektronischen Bausteinen sind Detektoren 117a, 117b und 117c zugeordnet, die sich ebenfalls in der Baueinheit befinden. Jede der vorgenannten elektronischen Einheiten ist aus denselben Bausteinen und in derselben Weise zusammengesetzt, wie es bereits zur Elektronik der Fig. 1 beschrieben worden ist, d. h. die dort beschriebene Elektronik (14, 15, 16, 17, 18 u. 19) wird in dem vorliegenden Ausführungsbeispiel zum Teil dreifach verwendet. Die Ausgangssignale $S_1$, $S_2$, $S_3$ werden in der Auswerteinheit 20, 21 zu Steuersignalen für das über das Koppelglied 23 verbundene Flugsteuerungssystem verarbeitet.

Hier wird der modulierte Laserlichtstrahl 111 über Strahlteiler 115 in Strahlen mit Wickeln $\gamma$ geteilt oder durch Strahlumlenker nacheinander in verschiedenen Richtungen gelenkt. Ebenfalls kann eine Anordnung gewählt werden, bei der der Meßstrahl auf einem Kegelmantel rotiert. Die durch die Böenquerströmung $B_Q$ in der Frequenz verschobene Rückstreustrahlung 113 wird — wie bereits beschrieben — verarbeitet, indem die Doppelverschiebung der Modulation nach dem Heterodyn- oder dem Homodyn-Verfahren demoduliert und ausgewertet wird.

Durch die vorstehend vorgeschlagenen Maßnahmen wird die Bereitstellung eines umfangreichen Meßvektors für eine hochwertige Flugführung geschaffen, wobei der bisherige Aufwand — beispielsweise die bisher erforderliche hohe Anzahl von Meßsensoren — wesentlich vermindert, ohne daß eine Beeinträchtigung des Flugführungssystems zu befürchten ist.

Da zwischen Strömungsgeschwindigkeit und Meßwert ein physikalisch gegebener linearer Zusammenhang besteht, lassen sich die vorgeschlagenen Maßnahmen sowohl für die Messung extrem hoher, aber auch extrem niedriger Geschwindigkeiten verwenden und auch bei MACH 1 sind nunmehr Messungen möglich.

## Patentansprüche

1. Doppler-Geschwindigkeitsmesser für Flugzeuge für die Geschwindigkeitsmessung anhand von diffus lichtstreuenden Objekten, bei dem eine optische Strahlung als Informationsträger dient, unter Verwendung einer Sende-/Detektoranordnung zur Messung der Luftströmung in Flugrichtung oder quer dazu durch Vergleich der ausgesendeten und der rückgestrahlten Signale, dadurch gekennzeichnet, daß die optische Strahlung zur Informationsgewinnung mit der Frequenz eines Oszillators (17) hochfrequent moduliert wird, daß die Detektoranordnung (14d, 117a—c) das rückgestreute Signal (13) an einen Mischer (16) gibt, der es mit der Modulationsfrequenz des Oszillators (17) mischt und daß das so erhaltene Differenzsignal das Maß für die Relativgeschwindigkeit des Flugzeugs zu der ihn umgebenden Luft ergibt.

2. Doppler-Geschwindigkeitsmesser für Flugzeuge für die Geschwindigkeitsmessung von diffus lichtstreuenden Objekten, bei dem eine optische Strahlung als Informationsträger dient, unter Verwendung einer Sende-/Detektoranordnung zur Messung der Luftströmung in Flugrichtung oder quer dazu durch Vergleich der ausgesendeten und der rückgestreuten Signale, nach Anspruch 1, dadurch gekennzeichnet, daß zur Bestimmung der Aerosolgröße und Aerosolanzahl das rückgestreute Signal (13) dient, und daß dem Empfängerausgang (19) hierfür eine gesonderte Auswerteinheit (22) zugeordnet ist.

3. Geschwindigkeitsmesser nach den Ansprüchen 1 und 2, dadurch gekennzeichnet, daß dem modulierten Meßstrahl (111) ein Strahlteiler (oder Strahlumlenker) (115) zur dreidimensionalen Anströmvektormessung zugeordnet ist.

4. Geschwindigkeitsmesser nach den Ansprüchen 1 bis 3, dadurch gekennzeichnet, daß zur zusätzlichen Messung der Querströmung ($B_Q$) mindestens eine zweite Sende-/Detektoranordnung (10 bis 19) vorgesehen ist.

5. Geschwindigkeitsmesser nach den Ansprüchen 1 bis 4, dadurch gekennzeichnet, daß zum Böenausgleich die im Empfängerausgang (19) erhaltenen Meßsignale Auswerteinheiten (20, 21) zugeführt werden, deren Ausgangssignale (S, $S_1$, $S_2$, $S_3$) über ein Koppelglied (23) in Steuerbefehle für das Flugsteuerungssystem umgesetzt werden.

## Claims

1. Doppler tachometer for aircraft for measuring aircraft speed by means of diffuse light-scattering object in which an optical beam serves as an information carrier employing a transmitter/detector arrangement for measuring the air current in the direction of flight or transverse thereto by comparing the signals transmitted and beamed back characterised by the fact that the optical beam for obtaining information is high-frequency modulated with the frequency of an oscillator (17), that the detector arrangement (14d, 117a—c) passes the signal beamed back (13) to a mixer (16) which mixes it with the modulation frequency of the oscillator (17) and the differential signal thus obtained serves as the velocity of the aircraft relative to the surrounding air.

2. Doppler tachometer for aircraft for measuring aircraft speed by means of diffuse light-scattering object in which an optical beam serves as an information carrier employing a transmitter/detector arrangement for measuring the air current in the direction of flight of transverse thereto by comparing the transmitted and reflected signals in accordance with claim 1, characterised by the fact that the reflected signal (13) serves to determine the aerosol size and aerosol number and that a separate analyser unit (22) is allocated to the receiver output (19) for this purpose.

3. Tachometer in accordance with claims 1 and 2, characterised by the fact that a beam divider (or beam deflector) (115) is allocated to the modulated measured beam (111) for measuring the angle of attack.

4. Tachometer in accordance with claims 1 to 3, characterised by the fact that at least a second transmitter/detector arrangement (10 to 19) is provided for additionally measuring the cross flow ($B_Q$).

5. Tachometer in accordance with claims 1 to 4, characterised by the fact that, to compensate for gusts, the signals obtained in the receiver output (19) are past to analyser units (20, 21), the output signals of which (s, $S_1$, $S_2$, $S_3$) are converted via a coupling element (23) into control commands for the flight control system.

## Revendications

1. Compteur de vitesse à effet Doppler-Fizeau pour avions pour la mesure de la vitesse à partir d'objets réfléchissant la lumière de manière diffuse, pour lequel une radiation optique sert de porteur de l'information, utilisant un dispositif émetteur/détecteur pour la mesure de l'écoulement de l'air dans le sens du vol et perpendiculairement à celui-ci, par comparaison des signaux émis et des signaux réfléchis, caractérisé en ce que la radiation optique servant à recueillir l'information est modulée à la fréquence d'un oscillateur (17) haute fréquence, que le dispositif de détection (14d, 117a—c) transmet le signal réfléchi (13) à un mélangeur (16) qui le mélange à la fréquence de modulation de l'oscillateur (17), le signal différence ainsi obtenu étant une mesure de la vitesse relative de l'avion par rapport à l'air environnant.

2. Compteur de vitesse à effet Doppler-Fizeau pour avions pour la mesure de la vitesse à partir d'objets réfléchissant la lumière de manière diffuse, pour lequel une radiation optique sert de porteur de l'information, utilisant un dispositif émetteur/détecteur pour la mesure de l'écoulement de l'air dans le sens du vol et perpendiculairement à celui-ci, par comparaison des signaux émis et des signaux réfléchis selon revendication 1, caractérisé en ce que le signal réfléchi (13) peut servir à la determination de la taille et de la densité de l'aérosol présent, et qu'une unité d'exploitation spéciale (22) est affectée pour cela à la sortie du récepteur (19).

3. Compteur de vitesse selon les revendications 1 et 2, caractérisé en ce qu'un diviseur de rayon (ou un dispositif de déviation du rayon) (115) est affecté au rayon de mesure modulé (111) pour une mesure tridimensionnelle du vecteur vitesse de l'air.

4. Compteur de vitesse selon les revendications 1 à 3, caractérisé en ce qu'au moins un deuxième dispositif émetteur/détecteur (10 à 19) est prévu pour la mesure supplémentaire de l'écoulement transversal ($B_Q$).

5. Compteur de vitesse selon les revendications 1 à 4, caractérisé en ce que pour la compensation des rafales, les signaux abtenus à la sortie (19) du récepteur sont acheminés vers des unités d'exploitation (20, 21) dont les signaux de sortie (s, $S_1$, $S_2$, $S_3$) sont convertis en instructions de commande pour le système de navigation par un élément de couplage (23).

FIG. 1

FIG. 2